## Europäisches Patentamt
## European Patent Office
## Office européen des brevets

(11) Veröffentlichungsnummer: **0 340 591**
**A2**

(12) # EUROPÄISCHE PATENTANMELDUNG

(21) Anmeldenummer: **89107372.8**

(22) Anmeldetag: **24.04.89**

(51) Int. Cl.4: **C08F 283/10** , **C08G 59/68** , **C09J 3/16**

Ein Antrag gemäss Regel 88 EPÜ auf Berichtigung der Numerierung der Patentansprüche für Spanien (16-18 wird 1-3) liegt vor. Über diesen Antrag wird im Laufe des Verfahrens vor der Prüfungsabteilung eine Entscheidung getroffen werden (Richtlinien für die Prüfung im EPA, A-V, 2.2).

Patentansprüche für folgenden Vertragsstaat: ES.

(30) Priorität: **02.05.88 DE 3814876**

(43) Veröffentlichungstag der Anmeldung:
**08.11.89 Patentblatt 89/45**

(84) Benannte Vertragsstaaten:
**AT BE CH DE ES FR GB IT LI NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Artiga Gonzàlez, René-Andrés, Dr.**
**Am Nettchesfeld 30**
**D-4000 Düsseldorf(DE)**
Erfinder: **Nicolaisen, Heinz-Christian**
**Ossietzkyring 4**
**D-3000 Hannover(DE)**
Erfinder: **Kammer, Lothar**
**Geibelstrasse 102**
**D-3000 Hannover(DE)**

(54) **Lichtinduziert dunkelhärtende Klebstoffe.**

(57) Lichtinduziert dunkelhärtende Klebstoffe, enthaltend Photoinitiatoren der allgemeinen Formel (I)
$$(Cp\text{-}Fe\text{-}aren)^+ X^- \quad (I)$$
bifunktionelle und mindestens trifunktionelle Epoxidverbindungen sowie Acrylate bzw. Methacrylate der allgemeinen Formel II
$$CH_2 = C(R^1)\text{-}CO\text{-}(OC_mH_{2m})_n\text{-}OR^2 \quad (II)$$
in der $R^1$ Wasserstoff oder Methyl und $R^2$ ein eine kationisch spaltbare Oxacycloalkylgruppe aufweisender Kohlenwasserstoffrest ist, liefern ausgezeichnete Ergebnisse beim Verkleben nicht-transparenter Substrate.

EP 0 340 591 A2

### Lichtinduziert dunkelhärtende Klebstoffe

Die Erfindung betrifft lichtinduziert dunkelhärtende Klebstoffe. Die Klebstoffe der Erfindung sind zum Kleben nicht transparenter, z.B. metallischer Substrate geeignet und enthalten mehrfunktionelle Glycidylverbindungen sowie Acrylate bzw. Methacrylate, wobei die lichtinduzierte Photopolymerisation im Dunkeln unter gleichzeitiger radikalischer und kationischer polymerisation der Monomeren abläuft.

Die lichtinduzierte kationische Polymerisation von Epoxiden ist seit langem bekannt, vgl. J. Crivello, "Advances in Polymer Science" 62, 3 (1984). In dieser Druckschrift werden als geeignete Photoinitiatoren, d.h. Verbindungen, die nach Bestrahlung mit Licht Protonen freisetzen und dadurch die Polymerisation von Epoxiden initiieren, organische Sulfonium bzw. Jodoniumsalze genannt.

Jodoniumsalze als Bestandteile photopolymerisierbarer Zusammensetzungen mit säurepolymerisierbaren bzw. säurehärtbaren Materialien werden auch in der DE-OS 26 02 574 beschrieben. Die in dieser Veröffentlichung beschriebenen Kleberzusammensetzungen sind auch als Klebstoffe für solche Substrate anwendbar, die "in situ" bestrahlt werden können, z.B. bei der Bildung von Schichtkörpern oder Laminaten, bei denen eine Lage oder Schicht oder beide strahlungsdurchlässig sind. Die Verklebung ist jedoch nur bei solchen Substraten vollständig möglich, bei denen mindestens ein Substrat durchlässig für die für die Polymerisationsreaktion erforderliche Strahlung ist. Dies ist ein wesentlicher Nachteil der dort beschriebenen, im übrigen durchaus brauchbaren Klebstoffe.

Aromatische Substituenten enthaltende Sulfoniumsalze, die als Photoinitiatoren zur Polymerisation von epoxidischen Monomeren geeignet sind, sind in der DE-OS 29 04 450 und der US-PS 4 173 474 beschrieben. Die dort beschriebenen Systeme weisen jedoch so niedrige Viskositäten auf, daß sie kaum als Klebstoffe eingesetzt werden können. Zudem läuft die einmal initiierte Vernetzungsreaktion mit so hoher Geschwindigkeit ab, daß die beschichteten Werkstoffe nicht mehr sicher an den gewünschten Stellen fixiert werden können.

Aren-Eisen-Komplexe sind eine neue Klasse von organometallisch-kationischen Photoinitiatoren, die durch elektromagnetische Strahlung derart angeregt werden, daß sie ihre Aren-Liganden gegen Epoxidgruppen tauschen, wobei der Lewis-Charakter des Komplexes zur Einleitung einer kationischen Polymerisation führt, vgl. R. Meier und H. Zweifel, J. Radiation Curing, Oktober 1986, 26.

Aren-Eisen-Komplexe sind gegenüber Oxidationsmitteln bei Umgebungstemperatur relativ stabil, vgl. H. Schumann, Chemiker-Zeitung 108,239 (1984). Erst durch die Einwirkung elektromagnetischer Strahlung kann das Zentralatom oxidiert werden, vgl. K. Maignar und H. Zweifel, ibid. Die entstehende Verbindung ermöglicht die radikalische Polymerisation; sie verhält sich daher ähnlich zu Oniumsalzen, die ebenfalls radikalische Polymerisationen einleiten können, vgl. H.J. Timpe, Makromol. Chem. Rapid Comm. 8,353 (1987).

Epoxidverbindungen enthaltende und mit Photoiniatoren polymerisierbare Systeme werden auch in EP-A 0 119 425 und EP-A 0 118 044 beschrieben. Die Festigkeiten der mit diesen Systemen erzielten Verklebungen sind mit Scherfestigkeiten unter $1N/mm^2$ jedoch schlecht. Dies kann darauf zurückgeführt werden, daß die ausgehärteten Klebstofffilme eine schlechte Affinität zu metallischen Oberflächen aufweisen.

Die Erfindung ist auf lichtinduziert dunkelhärtende Klebstoffe gerichtet, die bei nicht transparenten Substraten ausgezeichnete Festigkeiten der Verklebung ergeben. Diese Aufgabe wird durch Klebstoffe gelöst, die folgende Komponenten enthalten:

a) einen oder mehrere bifunktionelle Glycidylether eines gegebenenfalls modifizierten Diphenylolpropans mit Epoxidäquivalenten von 150 bis 300,

b) mindestens trifunktionelle Epoxidverbindungen die aus der Gruppe der Glycidylether des Glycerins, Trimethylolpropans, Pentaerythrits sowie der Novolake ausgewählt sind,

c) einen oder mehrere bei Einwirkung von elektromagnetischer Strahlung Lewisäureeigenschaften annehmende Photoinitiatoren der Formel I

$(Cp-Fe-aren)^+ X^-$    (I)

in der

Cp einen gegebenenfalls substituierten Cyclopentadienrest, aren einen gegebenenfalls substituierten Arenrest und

$X^-$ ein komplexes Anion einer organischen Säure bedeuten,

d) Acrylate bzw. Methacrylate der allgemeinen Formel II

$$CH_2 = C(R^1)-CO-(OC_mH_{2m})_n-OR^2 \quad (II)$$

in der $R^1$ Wasserstoff oder Methyl, $R^2$ ein eine kationisch spaltbare $C_2$-$C_5$-Oxacyloalkyl- bzw. $C_5$-Oxacycloalkenylfunktion aufweisender Kohlenwasserstoffrest mit bis zu 15 Kohlenstoffatomen, m die Zahlen 2 und/oder 3 und n die Zahlen 0, 1 oder 2 bedeuten,

e) Oxidationsmittel

sowie gegebenenfalls

f) Photosensibilisatoren, Pigmente und/oder andere übliche Hilfsstoffe.

Für die Klebstoffe der Erfindung geeignete Cyclopentadienyleisen-aren-Komplexe sind von H. Schumann, Chemiker-Zeitung 108 (11) 345-353, insbesondere 345, Tab. 1, sowie Seite 349/350, Tab. 3, publiziert. Die Herstellung dieser Verbindung ist in Chemiker-Zeitung 108(7/8), 239/251 (1984) beschrieben.

Gemäß einer vorteilhaften Ausführungsform der Erfindung ist die Gruppe aren der allgemeinen Formel I aus der von Benzol, Cumol, Naphthalin und Perylen gebildeten Gruppe ausgewählt. Die Gruppe $X^-$ der allgemeinen Formel I ist aus der von Tetrafluorborat (III), Hexachlorantimonat (V), Hexafluorantimonat (V), Hexafluorphosphat (V) und Hexafluorarsenat (V) gebildeten Gruppen von Anionen ausgewählt.

Besonders bevorzugte Photoiniatoren der Formel I sind aus der von

$(eta^5$-2,4-Cyclopentadien-1-yl)(1,2,3,4,5,6-eta)-benzol-eisen(II)-hexafluorphosphat(1-),

$(eta^5$-2,4-Cyclopentadien-1-yl)(1, 2, 3,4 ,5, 6-eta) (1-methylethyl)-benzol)-eisen(II)-hexafluorphosphat (1-),

$(eta^5$-2,4-Cyclopentadien-1-yl)(1,2,3,4,5,6-eta)-naphthalin-eisen(II)-hexafluorphosphat(1-) und

$(eta^5$-2,4-Cyclopentadien-1-yl)(1,2,3,4,S,6-eta)-perylen-eisen(II) hexafluorphosphat (1-)

gebildeten Gruppe ausgewählt.

Die in den Klebstoffen der Erfindung enthaltenen, bei Einwirkung von elektromagnetischer Strahlung Protonen freisetzenden Photoinitiatoren sind als solche bekannt und teilweise im Handel erhältlich. Unter "elektromagnetischer Strahlung" ist hierbei der gesamte Wellenlängenbereich zu verstehen, in dem sich üblicherweise die zur Initiation einer Photopolymerisation praktisch einsetzbare elektromagnetische Strahlung bewegen kann; dieser Bereich liegt üblicherweise zwischen 200 und 700 mm. Bevorzugt werden Photoinitiatoren, die im Wellenlängenbereich von 200 bis 600 mm anregbar sind.

Die in den Klebstoffen der Erfindung enthaltenen bifunktionellen Glycidylether eines gegebenenfalls modifizierten Diphenylolpropans mit Epoxidäquivalenten von 150 bis 300 sind als flüssige Komponenten im Handel erhältlich und im übrigen z.B. in "Ullmanns Encyclopedia of Industrial Chemistry", Vol. AI, pp. 230 bis 241, VCH-Verlagsgesellschaft, Weinheim (1985) beschrieben.

Unter Epoxidäquivalentgewicht wird hier und im folgenden diejenige Menge an Epoxidharz (in g) bezeichnet, die ein Äquivalent an Epoxidgruppen enthält. Ein Epoxidäquivalentgewicht von 170 bedeutet z.B., daß 170 g eines Epoxidgruppen enthaltenden Harzes ein Äquivalent derartiger epoxidischer Gruppen enthält.

Die in den Klebstoffen der Erfindung enthaltenen trifunktionellen Epoxidverbindungen aus der Gruppe der Glycidylether des Glycerins, Trimethylolpropans, Pentaerythrits sowie der Novolake sind ebenfalls handelsübliche Verbindungen. Sie ermöglichen bei der Photopolymerisation einen raschen Aufbau eines dreidimensionalen Netzwerks.

Schließlich müssen die erfindungsgemäßen Klebstoffe Oxidationsmittel enthalten. Unter ihnen sind die Peroxide geeignet, wie sie allgemein zur Auslösung der radikalischen Polymerisation benutzt werden. Diese vorzugsweise organischen Peroxide, welche als Oxidationsmittel in Frage kommen, sind dem Fachmann bekannt. Geeignete Peroxide müssen die Bedingung erfüllen, daß sie nicht aufgrund ihrer besonders hohen Reaktionsfreudigkeit bereits beim Zusammenmischen der Klebstoffe eine sofortige Reaktion initiieren Demnach sind im vorliegenden Fall Hydroperoxide wie etwa Cumolhydroperoxid oder tert.-Butylhydroperoxid besonders geeignet.

Die in den Klebstoffen der Erfindung enthaltenen Acrylate bzw. Methacrylate der allgemeinen Formel (II) sind als solche bekannt und größtenteils handelsübliche Verbindungen, die sich formal von Acrylsäure bzw. Methacrylsäure ableiten und - gegebenenfalls über eine Ethylenoxy- und/oder Propylenoxy-Funktion - mit einem Alkohol $R^2OH$ verestert sind. Die Gruppe $R^2$ ist oder enthält eine Oxacycloalkyl-bzw. Oxacycloalkenyl-Funktion, die bei Einwirkung von Protonen über eine Ringöffnungsreaktion mit den mehrfunktionellen Epoxidverbindungen des Klebstoffsystems der Erfindung reagiert.

Besonders bevorzugt sind Acrylate bzw. Methacrylate der allgemeinen Formel (I), in denen der Rest $R^2$ die allgemeine Formel (III)

$$-CH_2-R^3 \quad (III)$$

aufweist, wobei $R^3$ einen $C_2$-$C_5$-Oxacycloalkylring oder einen $C_5$-Oxacycloalkenylring bedeutet und $n = 0$ ist. Die Gruppe $R^3$ ist dabei insbesondere ein Oxiran-, Tetrahydrofuran-, Dihydropyran- oder Tetrahydropyranring.

Gemäß einer weiteren vorteilhaften Ausführungsform der Erfindung kann der Rest $R^2$ der Acrylate bzw. Methacrylate der allgemeinen Formel (I) die allgemeine Formel (IV)

$-C_6H_4(R^4)-O-Glycidyl$   (IV)

aufweisen, in der die Gruppe $R^4$ Wasserstoff oder Vinyl bedeutet. Derartige Verbindungen der Formel (II) sind formal Ester der Acryl- bzw Methacrylsäure mit gegebenenfalls vinylsubstituierten difunktionellen Phenolen, wobei eine OH-Funktion der difunktionellen Phenole mit Epichlorhydrin umgesetzt ist. Auch hier kann sich zwischen der Acryl- bzw. Methacrylsäurefunktion und der Alkoxyfunktion $R^2O-$ eine Ethylenoxy- und/oder Propylenoxyfunktion befinden (m = 2 und/oder 3; n = 1 oder 2); bevorzugt ist jedoch n = 0.

Gemäß einer weiteren vorteilhaften Ausführungsform der Erfindung kann der Rest $R^2$ der Formel (II) ein eine Epoxidfunktion aufweisender Cycloalkyl- oder Bicycloalkylrest mit 5 bis 10 Kohlenstoffatomen sein. Ein typisches Beispiel hierfür ist ein Rest $R^2$, der sich formal von einem Diepoxid des Dicyclopentadiens ableitet, wobei eine Epoxidfunktion des Diepoxids unter Ringöffnung mit Ethylenoxid umgesetzt ist. Das dabei erhaltene Hydroxyethyloxy-substituierte Epoxid des Dicyclopentadiens ist mit Acrylsäure bzw. Methacrylsäure verestert. Besonders bevorzugt sind somit Acrylate bzw. Methacrylate der Formel (II), in denen $R^1$ eine Methylgruppe, $R^2$ eine Epoxidotetrahydro-dicyclopentadienylgruppe sowie m = 1 und n = 1 oder m = 1 und n = 0 bedeuten. Diese Verbindungen sind im Handel erhältlich.

Gemäß einer weiteren vorteilhaften Ausführungsform der Erfindung bedeuten in der allgemeinen Formel (II) $R^1$ eine Methylgruppe, $R^2$ eine Glycidyl-, Tetrahydrofuranylmethyl-, Dihydropyranylmethyl-, Tetrahydropyranylmethyl- oder Glycidoxyl-substituierte Styrylgruppe. Auch diese Verbindungen sind im Handel erhältlich.

Die Klebstoffe der Erfindung können gegebenenfalls Photosensibilisatoren, Pigmente und/oder andere, dem Fachmann auf dem Gebiet der Klebetechnik geläufige übliche Hilfsstoffe, insbesondere Füllstoffe und dergleichen enthalten.

Gemäß einer weiteren vorteilhaften Ausführungsform der Erfindung enthalten die Klebstoffe bifunktionelle Glycidylether eines gegebenenfalls modifizierten Diphenylolpropans mit Epoxidäquivalenten von 150 bis 300 und mindestens trifunktionelle Epoxidverbindungen in molaren Verhältnissen, so daß auf 1 bis 20, insbesondere 1 bis 10 Epoxidgruppen der Diphenylolpropan-glycidylether eine Epoxidgruppe der mindestens trifunktionelle Epoxidverbindungen vorhanden ist. Besonders bevorzugt sind Klebstoffe der Erfindung, die auf 2 bis 8 Gew. -Teile der bifunktionellen Biphenylolpropan-glycedylether 0,7 bis 1 Gew.-Teile der Acrylate bzw. Methacrylate der Formel (II) enthalten.

Schließlich ist auch möglich, daß bis zu 20 Gew.-% der Acrylate bzw. Methacrylate der Formel (I) durch Ester der Acryl- bzw. Methacrylsäure mit $C_1$-$C_6$-Monoalkanolen oder $C_2$-$C_5$-Polyalkanolen mit 2 bis 4 Hydroxylgruppen ersetzt sind. Typische Beispiele für diese Ester der Acryl- bzw. Methacrylsäure sind Triethylenglycol-dimethacrylat, Trimethylolpropan-trimethacrylat, Hexylmethacrylat, Methylacrylat, Methylmethacrylat, Ethylacrylat, Ethylmethacrylat, Butylacrylat, Butylmethacrylat, Hexylmethacrylat und dergleichen.

In der praktischen Anwendung der Klebstoffe der Erfindung wird so verfahren, daß die Klebstoffgemische auf die zu verklebenden Substratflächen aufgetragen werden, bevorzugt auf beide zu verklebende Flächen. Dies geschieht üblicherweise dadurch, daß die viskose Klebstoffmasse auf die wie üblich vorbereiteten Substrate manuell mit einem Spatel oder mit Hilfe eines automatischen Auftragssystems aufgetragen wird; die Schichtdicke der Klebemischung auf den Substratflächen liegt üblicherweise im Bereich zwischen 0,5 und 3 mm

Die mit Klebstoff versehenen Substratflächen werden anschließend bestrahlt. Diese Strahlung kann ultraviolette Strahlung sein. Es ist jedoch auch möglich, die Polymerisation durch Bestrahlung aus dem elektromagnetischen Spektrum zu initiieren, die sowohl sichtbare als auch ultraviolette Anteile enthält. Dabei kann sowohl Sonnenlicht als Strahlungsquelle als auch irgendeine andere spezielle Strahlungsquelle eingesetzt werden, die nur Licht innerhalb eines sehr engen Bereichs des elektromagnetischen Spektrums aufweist.

Ein wesentlicher Schritt des Einsatzes der Klebstoffe der Erfindung ist darin zu sehen, daß man die Polymerisation der Klebemischung im Verlauf der Bestrahlung bis kurz vor den Gelpunkt des Polymeren führt, ohne die mit der Klebemischung versehenen Substratflächen zusammenzufügen. Für den Erfolg des Klebevorgangs ist es somit von Bedeutung, daß die Zeit bestimmt wird, in der an der Oberfläche des aufgetragenen Klebstoffes der Gelpunkt erreicht wird. Üblicherweise geschieht diese Gelpunktbestimmung unter den gleichen Bedingungen, unter denen auch der Klebevorgang erfolgt. Zweckmäßigerweise wird der Gelpunkt in einem dem eigentlichen Klebevorgang vorgelagerten, separaten Bestimmungsschritt für eine Klebemischung einer bestimmten Zusammensetzung bestimmt. Dies geschieht dadurch, daß man auf die zu verklebenden Substratflächen eine Klebstoffschicht aufträgt und - beginnend mit dem Zeitpunkt des Auftrags -die Zeit bestimmt, innerhalb derer die Klebstoffschicht beim Berühren mit einem Holzspatel noch "Fäden" des Polymeren zieht, das Polymere also noch fließen kann. Der Gelpunkt des Polymeren ist dann erreicht, wenn die Oberfläche der Klebstoffschicht beim Berühren mit dem Spatel keine Fäden mehr zieht, also nicht mehr fließt

Die seit dem Zeitpunkt des Auftrags der Klebemischung auf die Substrate vergangene Zeit ist dann diejenige Zeit, innerhalb der der Gelpunkt des jeweiligen Polymeren erreicht wird. Die zu verklebenden und mit Klebemischung beaufschlagten Substratflächen müssen kurz vor Erreichung des Gelpunktes, also möglichst knapp vor der vorher bestimmten Zeit, vereinigt werden; werden die Klebeflächen zu früh vereinigt, kann die Polymerisation in der Klebefuge zum Stillstand kommen. Werden die mit Klebemischung beaufschlagten Substratflächen erst nach Erreichen des Klebepunktes vereinigt, können die mit Klebemischung beschichteten Substrate meist nicht mehr verklebt werden, da die Polymerisation schon zum Abschluß gekommen ist. Werden dagegen die mit Klebemischung beaufschlagten Substratflächen kurz vor Erreichung des Gelpunktes vereinigt, lassen sich mit dem Verfahren der Erfindung zum Kleben fester Substrate optimale Klebeergebnisse erzielen. Die erhaltenen Zugscherfestigkeiten liegen - insbesondere für metallische Substrate - im Bereich bis zu 20 N.mm$^{-2}$. Damit weisen sie eine deutlich höhere Festigkeit auf, als sie mit bisher bekannten Verfahren zum Kleben fester Substrate erreichbar waren. Der besondere Vorteil der Klebstoffe der Erfindung liegt darin begründet, daß bei einer Vereinigung der mit der Klebemischung beaufschlagten Substratflächen kurz vor Erreichen des Gelpunktes die verklebende Polymermischung aushärtet, ohne daß sie weiter bestrahlt werden muß. Es ist daher möglich, die Polymerisation auch z.B. im Dunkeln einer Klebefuge zu beenden.

Ein weiterer Vorteil der Klebstoffe der Erfindung ist darin zu sehen, daß sie sogenannte "Ein-Komponenten-Systeme" darstellen. Dies bringt anwendungstechnische Vorteile, da der Anwender z.B. nicht mehr unterschiedliche Komponenten der Klebemischung kurz vor dem Klebeverfahren miteinander vermischen muß. Die Klebstoffe der Erfindung sind lagerfähig und bedürfen nicht des Zusatzes irgendwelcher Verdickungsmittel, die häufig die Klebeeigenschaften beeinträchtigen.

Die Erfindung wird im folgenden von bevorzugten Ausführungsbeispielen näher erläutert.

Beispiel 1.

Es wurde drei Klebemischungen A,B und C aus den folgenden Komponenten:

a) 200 g handelsübliches Epoxidharz mit einem Epoxidäquivalent von 190 (modifizierter Glycidylether des Diphenylolpropans),

b) 50 g handelsübliches Epoxidharz mit einem Epoxidäquivalent von 225 (Oligomeres des Bisphenol-A-diglycidylethers),

c) 30,8 g Trimethylolpropan-glycidylether,

d) 41,7 g handelsübliches Tetrahydrofurfuryl-methacrylat,

e) handelsübliches (Cyclopentadien/Cumol/Eisen)-hexafluorphosphat (Mischung A: 6,1 g; Mischung B: 9,1 g; Mischung C: 15,3 g und

f) 12,5 g Cumolhydroperoxid

bei Rotlicht durch Mischen der Einzelkomponenten in einem Mischer hergestellt.

Die so erhaltenen Klebemischungen wurden in 2 mm dicker Schicht auf ein Eisenblech aufgetragen und mit einer handelsüblichen UVA-Lampe (Fa. Heraeus, UVA-92 mW/cm$^2$ in einem Abstand von 20 cm bestrahlt. Es wurde die Zeit ermittelt, innerhalb der vom Zeitpunkt der ersten Bestrahlung an die Klebeschicht beim Berühren mit einem Holzspatel noch Fäden zog, d.h. noch fließfähig war. Diese Zeitspanne ( = Gelpunkt) war nach 45 Sekunden bei Mischung A, 40 Sekunden bei Mischung B und 30 Sekunden bei Mischung C erreicht. Nach Bestimmung des Gelpunktes wurde ein anderer Teil der Klebemischung auf entfettete und sandgestrahlte Eisenbleche mit den Abmessungen 10 cm x 2,5 cm x 0,5 cm aufgetragen; die Klebstoffauftragfläche betrug 2,5 cm$^2$. Die mit der Klebemischung versehenen Eisenbleche wurden bei Mischung A 40 sec., Mischung B 37 sec. und Mischung C 27 sec., d.h. kurz vor Erreichen des Gelpunktes, bestrahlt. Jeweils 2 Eisenbleche wurden mit den mit Klebstoff versehenen Flächen aufeinandergelegt und unter leichtem Druck (etwa 1 N/cm$^2$) 24 Stunden lang bei 22° C gelagert. Die Zugscherfestigkeiten wurden entsprechend den DIN-Normen 53281 und 53282 nach 24 Stunden ermittelt.

| Mischung | Bestrahlungszeit | Zugscherfestigkeit |
|----------|------------------|--------------------|
|          | (sec)            | MPa                |
| A        | 40               | 19,0               |
| B        | 37               | 15,9               |
| C        | 27               | 16,6               |

Beispiel 2.

Es wurden drei Klebemischungen aus den folgenden Komponenten hergestellt:

a) 200 g handelsübliches Epoxidharz mit einem Epoxidäquivalent von 190 (modifizierter Glycidylether des Diphenylolpropans),

b) 50 g handelsübliches Epoxidharz mit einem Epoxidäquivalent von 225 (Oligomeres des Bisphenol-A-diglycidylethers),

c) 30,8 g Trimethylolpropan-glycidylether

d) 41,7 g Tetrahydrofurfurylmethacrylat

e) 12,3 g (Cyclopentadien-Cumol-Eisen)-hexafluorphosphat und

f) handelsübliches Cumolhydroperoxid (Mischung A: 6,3 g; Mischung B: 9,4 g; Mischung C: 15,6 g).

Die erhaltenen Klebeergebnisse sind in der folgenden Aufstellung zusammengefaßt:

| Mischung | Bestrahlungszeit | Zugscherfestigkeit |
|----------|------------------|--------------------|
|          | (sec)            | MPa                |
| A        | 30               | 13,6               |
| B        | 25               | 20,8               |
| C        | 22               | 17,8               |

Beispiel 3.

Wie in Beispiel 1 beschrieben wurde eine Klebemischung aus

a) 50 g handelsüblichem Epoxidharz mit einem Epoxidäquivalent von 225 (Oligomeres des Bisphenol-A-diglycidylethers),

b) 200 g Pentaerythrit-glycidylether

c) 30,8 g Trimethylolpropan-triglycidylether

d) 41,7 g Tetrahydrofurfurylmethacrylat

e) 12,3 g (Cumol-Cyclopentadien-Eisen)-hexafluorphosphat

f) 1,25 g Cumolhydroperoxid

hergestellt.

Der Gelpunkt der Mischung betrug 28 sec, die Zugscherfestigkeit 14,8 MPa.

Beispiel 4.

Es wurde eine Klebmischung aus den folgenden Komponenten:

a) 20 g handelsübliches Epoxidharz mit einem Epoxidäquivalent von 190 (modifizierter Glycidylether des Diphenylolpropans),

b) 5 g handelsübliches Epoxidharz mit einem Epoxidäquivalent von 225 (Oligomeres des Bisphenol-A-Diglycidylethers),

c) 3,1 g Trimethylolpropan-glycidylether

d) 4,2 g Tetrahydrofurfurylmethacrylat

e) 1,2 g (Cyclopentadien-Naphthalin-Eisen)-hexafluorphoshat und

6

f) 0,9 g Cumolhydroperoxid

hergestellt.

Der Gelpunkt der Mischung betrug 20 sec, die Zugscherfestigkeit 18,4 MPa.

Beispiel 5.

Es wurde eine Klebemischung aus den folgenden Komponenten:

a) 20 g handelsübliches Epoxidharz mit einem Epoxidäguivalent von 190 (modifizierter Glycidylether des Diphenylolpropans),

b) 5 g handeslübliches Epoxidharz mit einem Epoxidäquivalent von 225 (Oligomeres des Bisphenol-A-Diglycidylethers),

c) 3, 1 g Trimethylolpropan-glycidylether

d) 4,2 g Tetrahydrofurfurylmethacrylat

e) 1, 2 g (Cyclopentadien-Perylen-Eisen)-hexafluorphosphat und

f) 0,9 g Cumolhydroperoxid

hergestellt.

Der Gelpunkt der Mischung betrug 15 sec, die Zugscherfestigkeit 13,7 MPa.

**Ansprüche**

1. Lichtinduziert dunkelhärtende Klebstoffe, enthaltend

a) einen oder mehrere bifunktionelle Glycidylether eines gegebenenfalls modifizierten Diphenylolpropans mit Epoxidäquivalenten von 150 bis 300,

b) mindestens trifunktionelle Epoxidverbindungen, die aus der Gruppe der Glycidylether des Glycerins, Trimethylolpropans, Pentaerythrits sowie der Novolake ausgewählt sind,

c) einen oder mehrere bei Einwirkung von elektromagnetischer Strahlung Lewissäureeigenschaften annehmende Photoinitiatoren der Formel I

$$(Cp\text{-}Fe\text{-}aren)^{+}X^{-} \qquad (I)$$

in der

Cp einen gegebenenfalls substituierten Cyclopentadienrest,

aren einen gegebenenfalls substituierten Arenrest und

$X^{-}$ ein komplexes Anion einer anorganischen Säure bedeuten

d) Acrylate bzw. Methacrylate der allgemeinen Formel II

$$CH_2 = C(R^1)\text{-}CO\text{-}(OC_mH_{2m})_n\text{-}OR^2 \qquad (II)$$

in der $R^1$ Wasserstoff oder Methyl, $R^2$ ein eine kationisch spaltbare $C_2$-$C_5$-Oxacycloalkyl- bzw. $C_5$-Oxacycloalkenylfunktion aufweisender Kohlenwasserstoffrest mit bis zu 15 Kohlenstoffatomen, m die Zahlen 2 und/oder 3 und n die Zahlen 0, 1 oder 2 bedeuten,

e) ein Oxidationsmittel,

sowie gegebenenfalls

f) Pigmente und/oder andere übliche Hilfsstoffe.

2. Lichtinduziert dunkelhärtende Klebstoffe nach Anspruch 1, dadurch gekennzeichnet, daß die Gruppe aren der allgemeinen Formel I aus der von Benzol, Cumol, Naphthalin und Perylen gebildeten Gruppe ausgewählt ist.

3. Lichtinduziert dunkelhärtende Klebstoffe nach Anspruch 1, dadurch gekennzeichnet, daß die Gruppe $X^{-}$ der allgemeinen Formel I aus der von Tetrafluorborat (III), Hexachlorantimonat (V), Hexafluorantimonat (V), Hexafluorphosphat (V) und Hexafluorarsenat (V) gebildeten Gruppe von Anionen ausgewählt ist.

4. Lichtinduziert dunkelhärtende Klebstoffe nach mindestens einem der Ansprüche 1 bis 3, dadurch gekennzeichnet, daß die Photoinitiatoren der Formel (I) aus der

$(eta^5\text{-}2,4\text{-}Cyclopentadien\text{-}1\text{-}yl)(1,2,3,4,5\text{-}6\text{-}eta)\text{-}benzol)\text{-}eisen(II)\text{-}hexafluorphosphat(1\text{-})$,

$(eta^5\text{-}2,4\text{-}Cyclopentadien\text{-}1\text{-}yl)(1,2,3,4,5,6\text{-}eta) (1\text{-}methylethyl)\text{-}benzol)\text{-}eisen(II)\text{-}hexafluorphosphat(1\text{-})$,

- $(eta^5\text{-}2,4\text{-}Cyclopentadien\text{-}1\text{-}yl)(1,2,3,4,5,6\text{-}eta)\text{-}naphthalin\text{-}eisen(II)\text{-}hexafluorphosphat(1\text{-})$ und

- $(eta^5\text{-}2,4\text{-}Cyclopentadien\text{-}1\text{-}yl)(1,2,3,4,5,6\text{-}eta)\text{-}perylen)\text{-}eisen(II)\text{-}hexafluorphosphat(1\text{-})$

gebildeten Gruppe ausgewählt sind.

EP 0 340 591 A2

5. Lichtinduziert dunkelhärtende Klebstoffe nach mindestens einem der Ansprüche 1 bis 4, dadurch gekennzeichnet, daß der Rest $R^2$ der Formel II die allgemeine Formel III

- $CH_2$-$R^3$    (III)

aufweist, in der $R^3$ einen $C_2$-$C_5$-Oxacycloalkylring oder einen $C_5$-Oxacycloalkenylring bedeutet und n = 0 ist.

6. Lichtinduziert dunkelhärtende Klebstoffe nach mindestens einem der Ansprüche 1 bis 5, dadurch gekennzeichnet, daß der Rest $R^2$ der Formel I die allgemeine Formel IV

- $C_5H_4(R^4)$-O-Glycidyl    (IV)

aufweist, in der $R^4$ Wasserstoff oder Vinyl bedeutet.

7. Lichtinduziert dunkelhärtende Klebstoffe nach mindestens einem der Ansprüche 1 bis 6, dadurch gekennzeichnet, daß der Rest $R^2$ der Formel II ein eine Epoxidfunktion aufweisender Cycloalkyl- oder Bicycloalkylrest mit 5 bis 10 Kohlenstoffatomen ist.

8. Lichtinduziert dunkelhärtende Klebstoffe nach mindestens einem der Ansprüche 1 bis 7, dadurch gekennzeichnet, daß in der allgemeinen Formel II $R^1$ eine Methylgruppe, $R^2$ eine Glycidyl-, Tetrahydrofuranylmethyl-, Dihydropyranylmethyl-, Tetrahydropyranylmethyl, oder glycidoxy-substituierte Styrylgruppe und n = 0 bedeuten.

9. Lichtinduziert dunkelhärtende Klebstoffe nach mindestens einem der Ansprüche 1 bis 8, dadurch gekennzeichnet, daß in der allgemeinen Formel II $R^1$ eine Methylgruppe, $R^2$ eine Epoxido-tetrahydrodicyclopentadienylgruppe sowie m = 1 und n = 0 bedeuten.

10. Lichtinduziert dunkelhärtende Klebstoffe nach mindestens einem der Ansprüche 1 bis 9, dadurch gekennzeichnet, daß sie bifunktionelle Glycidylether eines gegebenenfalls modifizierten Diphenylolpropans mit Epoxidäquivalenten von 150 bis 300 und mindestens trifunktionelle Epoxidverbindungen in molaren Verhältnissen enthalten, so daß auf 1 bis 20, insbesondere 1 bis 10 Epoxidgruppen der Diphenylolpropanglycidylether eine Epoxidgruppe der mindestens trifunktionellen Epoxidverbindungen vorhanden ist.

11. Lichtinduziert dunkelhärtende Klebstoffe nach mindestens einem der Ansprüche 1 bis 10, dadurch gekennzeichnet, daß sie auf 2 bis 8 Gew.-Teile der bifunktionellen Diphenylolpropan-glycidylether 0,7 bis 1 Gew.-Teile der Acrylate bzw. Methacrylate der Formel II enthalten.

12. Lichtinduziert dunkelhärtende Klebstoffe nach mindestens einem der Ansprüche 1 bis 11, dadurch gekennzeichnet, daß bis 20 Gew.-% der Acrylate- bzw. Methacrylate der Formel II durch Ester der Acryl- bzw. Methacrylsäure mit $C_1$-$C_8$-Monoalkanolen oder $C_2$-$C_5$-Polyalkanolen mit 2 bis 4 Hydroxylgruppen ersetzt sind.

13. Lichtinduziert dunkelhärtende Klebstoffe nach mindestens einem der Ansprüche 1 bis 12, dadurch gekennzeichnet, daß sie 0,1 bis 10, insbesondere 1 bis 6 Gew.-Teile der Photoinitiatoren der allgemeinen Formel I auf 100 Gew.-Teile Klebstoff enthalten.

14. Lichtinduziert dunkelhärtende Klebstoffe nach mindestens einem der Ansprüche 1 bis 13, dadurch gekennzeichnet, daß sie als Oxidationsmittel pro 100 Gew.-Teile Klebstoffe 0,5 bis 10, insbesondere 1 bis 6 Gew.-Teile Hydroperoxide enthalten.

15. Lichtinduziert dunkelhärtende Klebstoffe nach mindestens einem der Ansprüche 1 bis 14, dadurch gekennzeichnet, daß sie Cumolhydroperoxid oder tert.- Butylhydroperoxid als Oxidationsmittel enthalten

16. Verfahren zum Verkleben von nicht lichtdurchlässigen bzw. nur teilweise lichtdurchlässigen Flächen mittels lichtinduziert dunkelhärtender Klebstoffe, dadurch gekennzeichnet, daß man Gemische aus

a) einen oder mehrere bifunktionelle Glycidylether eines gegebenenfalls modifizierten Diphenylolpropans mit Epoxidäquivalenten von 150 bis 300,

b) mindestens trifunktionelle Epoxidverbindungen, die aus der Gruppe der Glycidylether des Glycerins, Trimethylolpropans, Pentaerythrits sowie der Novolake ausgewählt sind,

c) einen oder mehrere bei Einwirkung von elektromagnetischer Strahlung Lewissäureeigenschaften annehmende Photoinitiatoren der Formel I

(Cp-Fe-aren)$^+$x$^-$    (I)

in der

Cp einen gegebenenfalls substituierten Cyclopentadienrest, aren einen gegebenenfalls substituierten Arenrest und x$^-$ ein komplexes Anion einer anorganischen Säure bedeuten

d)Acrylate bzw. Methacrylate der allgemeinen Formel II

$CH_2 = C(R^1)$-CO-$(OC_mH_{2m})_n$-$OR^2$    (II)

in der $R^1$ Wasserstoff oder Methyl, $R^2$ ein eine kationisch spaltbare $C_2$-$C_5$-Oxacycloalkyl- bzw. $C_5$-Oxacycloalkenylfunktion aufweisender Kohlenwasserstoffrest mit bis zu 15 Kohlenstoffatomen, m die Zahlen 2 und/oder 3 und n die Zahlen 0, 1 oder 2 bedeuten,

e) ein Oxidationsmittel,

sowie gegebenenfalls

8

f) Pigmente und/oder andere übliche Hilfsstoffe herstellt und diese auf die zu verklebenden Flächen aufträgt, während einer zur Auslösung der radikalischen Polymerisation ausreichenden Zeit bestrahlt und die Flächen dann zusammenfügt und solange aufeinanderdrückt, bis Haftung zwischen den Flächen eingetreten ist.

17) Verfahren nach Anspruch 16, dadurch gekennzeichnet, ·daß man die Strahlung mit UV-Licht und/oder kurzwellige Strahlung enthaltendem Sonnenlicht vornimmt.

18) Verfahren nach Anspruch 17, dadurch gekennzeichnet, daß man Zusammensetzungen gemäß einem der Patentansprüche 1 bis 15 verwendet.

Patentansprüche für folgenden Vertragsstaat : ES

16. Verfahren zum Verkleben von nicht lichtdurchlässigen bzw. nur teilweise lichtdurchlässigen Flächen mittels lichtinduziert dunkelhärtender Klebstoffe, dadurch gekennzeichnet, daß man Gemische aus

a) einen oder mehrere bifunktionelle Glycidylether eines gegebenenfalls modifizierten Diphenylolpropans mit Epoxidäquivalenten von 150 bis 300,

b) mindestens trifunktionelle Epoxidverbindungen, die aus der Gruppe der Glycidylether des Glycerins, Trimethylolpropans, Pentaerythrits sowie der Novolake ausgewählt sind,

c) einen oder mehrere bei Einwirkung von elektromagnetischer Strahlung Lewissäureeigenschaften annehmende Photoinitiatoren der Formel I

$(Cp\text{-}Fe\text{-}aren)^{+}x^{-}$    (I)

in der

Cp einen gegebenenfalls substituierten Cyclopentadienrest, aren einen gegebenenfalls substituierten Arenrest und $x^{-}$ ein komplexes Anion einer anorganischen Säure bedeuten

d) Acrylate bzw. Methacrylate der allgemeinen Formel II

$CH_2 = C(R^1)\text{-}CO\text{-}(OC_mH_{2m})_n\text{-}OR^2$    (II)

in der $R^1$ Wasserstoff oder Methyl, $R^2$ ein eine kationisch spaltbare $C_2$-$C_5$-Oxacycloalkyl- bzw. $C_5$-Oxacycloalkenylfunktion aufweisender Kohlenwasserstoffrest mit bis zu 15 Kohlenstoffatomen, m die Zahlen 2 und/oder 3 und n die Zahlen 0, 1 oder 2 bedeuten,

e) ein Oxidationsmittel,

sowie gegebenenfalls

f) Pigmente und/oder andere übliche Hilfsstoffe herstellt und diese auf die zu verklebenden Flächen aufträgt, während einer zur Auslösung der radikalischen Polymerisation ausreichenden Zeit bestrahlt und die Flächen dann zusammenfügt und solange aufeinanderdrückt, bis Haftung zwischen den Flächen eingetreten ist.

17) Verfahren nach Anspruch 16, dadurch gekennzeichnet, daß man die Strahlung mit UV-Licht und/oder kurzwellige Strahlung enthaltendem Sonnenlicht vornimmt.

18) Verfahren nach Anspruch 17, dadurch gekennzeichnet, daß man Zusammensetzungen gemäß einem der Patentansprüche 1 bis 15 verwendet.